# EUROPEAN PATENT SPECIFICATION

(11) **EP 2 950 211 B1**
(45) Date of publication and mention of the grant of the patent: **07.07.2021**
(21) Application number: 14742879.1
(22) Date of filing: 15.01.2014
(51) Int. Cl.: G06F 8/41

(54) **PARALLELISM EXTRACTION METHOD AND METHOD FOR MAKING PROGRAM**
PARALLELITÄTSEXTRAKTIONSVERFAHREN UND VERFAHREN ZUR PROGRAMMHERSTELLUNG
PROCÉDÉ D'EXTRACTION DE PARALLÉLISME ET PROCÉDÉ DE RÉALISATION DE PROGRAMME

(30) Priority: 23.01.2013 JP 2013010194
(43) Date of publication of application: 02.12.2015
(73) Proprietor: Waseda University, Tokyo 169-8050 (JP)
(72) Inventor: KASAHARA, Hironori, Tokyo 169-8050 (JP); KIMURA, Keiji, Tokyo 169-8050 (JP); HAYASHI, Akihiro, Tokyo 169-8050 (JP); MIKAMI, Hiroki, Tokyo 169-8050 (JP); KANEHAGI, Yohei, Tokyo 169-8050 (JP); UMEDA, Dan, Tokyo 169-8050 (JP); SAWADA, Mitsuo, Toyota-shi Aichi 471-8571 (JP)
(74) Representative: Slingsby Partners LLP
(86) International application number: PCT/JP2014/050517
(87) International publication number: WO 2014/115613

(56) References cited:
- EP-A1- 0 927 930
- EP-A1- 1 132 814
- WO-A1-2010/047174
- WO-A1-2013/010159
- JP-A- 2009 104 422
- JP-A- 2012 103 923
- US-A1- 2007 255 929
- DAVID F BACON ET AL: "Compiler transformations for high-performance computing", ACM COMPUTING SURVEYS, ACM, NEW YORK, NY, US, US, vol. 26, no. 4, 1 December 1994 (1994-12-01), pages 345-420, XP058221666, ISSN: 0360-0300, DOI: 10.1145/197405.197406
- KENTO AIDA ET AL.: 'Macro Dataflow Shori ni Okeru Macro Task Bunkatsu Yugo Shuho' IEICE TECHNICAL REPORT vol. 91, no. 130, 16 July 1991, pages 205 - 212, XP008180503
- DAN UMEDA ET AL.: 'Parallelization of Basic Engine Controll Software Model on Multicore Processor' IPSJ SIG NOTES, 2012 (HEISEI 24) NENDO ?3? 15 October 2012, pages 1 - 7, XP055277075
- YOHEI KANEHAGI ET AL.: 'Parallelization of Automobile Engine Control Software on Multicore Processor' IEICE TECHNICAL REPORT vol. 112, no. 425, 24 January 2013, pages 3 - 10, XP055277086

## Description

### Technical Field

This application claims priority to Japanese Patent Application No. 2013-010194 filed on January 23, 2013.

The present invention relates to a method of extracting parallelism underlying in an original program of sequential processing, and a method of producing, using the parallelism extraction method, a parallelized program executed on a multicore processor including a plurality of processor cores.

### Background Art

Multicore processors in which a plurality of processor cores are integrated have been released one after another by microprocessor manufacturers. The movement of using multicore microprocessors has been seen not only in the fields of supercomputers, servers, desktop computers, and PC servers but also in the fields of home information appliances and device embedment (for example, mobile phones, game machines, car navigation systems, digital television receivers, and HDD/DVD recorders and players).

Meanwhile, for the development of next-generation vehicles which are safer, more comfortable, and more energy-saving, it is important to enhance each of a real-time control system for engine control and the like, an information system for external recognition such as person recognition and other vehicle recognition and presentation of information necessary for driving, music, video, and the like, and an integrated control system for integrated control of the control system and the information system.

To enhance the control system, the information system, and the integrated control system, higher functionality of processors is important. For example, to enhance the engine control system which is important for the development of safer, more comfortable, and more energy-saving vehicles, increases in computational load due to enhancement of control algorithms, realization of new control functions, and the like are inevitable.

### Citation List

### Patent Literature

Patent Literature 1: Japanese Patent Application Laid-Open No. 2001-175619 Non Patent Literature

Non Patent Literature 1: Seo, K., et al., Coordinated implementation and processing of a unified chassis control algorithm with multi-central processing unit, J AUT01346,Vol. 224 (2009)
Non Patent Literature 2: Seo, K., et al., An Investigation into Multi-Core Architectures to Improve a Processing Performance of the Unified Chassis Control Algorithms, S AE Int. J. Passeng. Cars-Electlon. Electr. Syst., Vol.3, pp. 53-62 (2010)
Non Patent Literature 3: OSEK/VDX-Portal http://portal.osek-vdx.org/
Non Patent Literature 4: Kasahara, H., et al., Automatic Coarse Grain Task Parallel Processing on SMP using Open MP, Proc. of The 13th International Workshop on Languages and Compilers for Parallel Computing (LCPC2000) (2000)
Non Patent Literature 5: Y. Yuyama, et al., A 45nm 37.3GOPS/W Heterogeneous Multi-Core SoC, ISSCC2010
Non Patent Literature 6: H. Kasahara, et al., OSCAR FORTRAN COMPILER, 1991 International Logic Programming Symposium, Workshop on Compilation of (symbolic) Languages for parallel Computers, Oct. 31-Nov. 1, 1991, San Diego, U.S.A.

US 2007/0255929 A1 discloses a multiprocessor system and a multigrain parallelizing compiler, wherein data dependency between macro tasks for parallelization is analyzed. In this document it is explained how to view macrotask graphs for extracting the parallelism.

### Summary of Invention

### Technical Problem

To solve such a problem of increases in computational load associated with the need to enhance the engine control system, higher functionality of processors used for engine control is essential.

Conventionally, the operating frequency of a processor needs to be increased in order to enhance its functionality. Such a technique is, however, difficult to be applied to apparatuses such as vehicles, for the following reasons: since the power consumption increases with the cube of the operating frequency, a significant increase in power consumption ensues; and safe operation needs to be ensured even in harsh operating environments of vehicles. This creates demand to shift to multicore processors capable of simultaneously achieving faster processing and lower power consumption by integrating a plurality of low-operating frequency processor cores on one chip and causing lower-frequency and lower-voltage processor cores to operate in parallel.

To meet such demand, multicore utilizing techniques in the car industry have been proposed. For example, an electronic control unit using a multicore processor has been proposed in a multicore architecture that employs a unified chassis control (UCC) algorithm, as described in Non Patent Literatures 1 and 2. This multicore processor is made up of three processor cores. The electronic control unit is divided into three functions, and the three functions are assigned to the respective three processor cores for functional distribution. The method is called asymmetric multicore processing (AMP), and can improve throughput by achieving functional distribution but has difficulty in reducing latency. The method also has a problem of being unable to make maximum use of multicore resources unless the load for each function is evenly balanced.

The present techniques propose a method of reducing latency, i.e. increasing speed, by applying parallel processing to engine control which is a main function of a vehicle control system as described later. To perform faster computation for engine control and the like on a multicore processor than conventional processing on one processor core, a method of dividing computation and appropriately assigning computational loads to a plurality of processors to perform the computation, namely, symmetric multicore processing (SMP), is important. This computation method SMP is typically referred to as parallel processing, and a program for parallel processing is referred to as a parallelized program. Producing or generating a parallelized program from an original program of sequential processing that runs on one processor is referred to as program parallelization.

Manual program parallelization has serious problems such as an increase in development period and a resulting increase in software development cost, and a decrease in reliability of the parallelized program. Software for automatically generating a parallelized program from a sequential processing program has been studied in order to solve such problems.

As a conventional parallelization method, a compiler for multigrain parallel processing which has been subjected to research and development by the inventors, called OSCAR compiler, is known (Patent Literature 1). The following describes the typical functions of the OSCAR compiler. A compiler normally means a program for converting a source program to be compiled into a computer-executable program (e.g. a program in a machine language). The parallelization compiler (OSCAR compiler) described below, on the other hand, has a function of generating a source code (an object code in some cases) of a parallelized program from a source code of an original program of sequential processing.

Multigrain parallel processing, which is a feature of the OSCAR compiler, is parallel processing in which coarse grain task parallel processing using parallelism among coarse grain tasks such as loops and subroutines present in the original program, medium grain parallel processing using parallelism in loop iteration level, and near fine grain parallel processing using parallelism in statement level inside basic blocks are combined hierarchically and performed across the whole program. Multigrain parallel processing, which is described in detail in Non Patent Literature 4, is briefly described below with reference to a flowchart in FIG. 17.

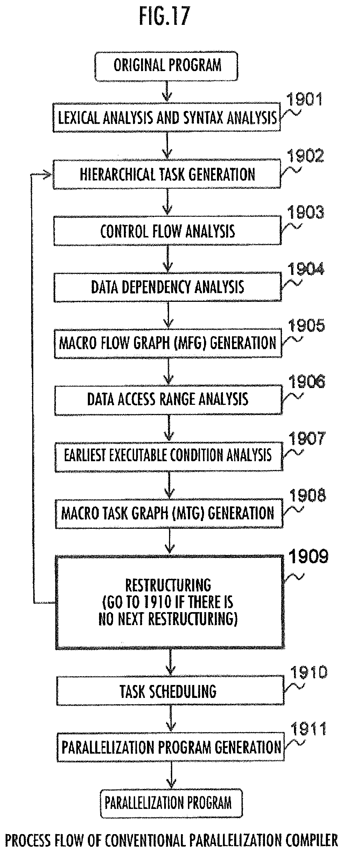

In the coarse grain parallel processing, the compiler performs "lexical analysis and syntax analysis" in step 1901 and "macro task generation" in step 1902 in the flowchart in FIG 17, to decompose the original program as the source into three types of coarse grain tasks (hereafter referred to as "macro tasks (MTs)") such as blocks of pseudo assignment (BPA), repetition blocks (RB), and subroutine blocks (SB). After the MT generation, the compiler performs "control flow analysis" in step 1903 and "data dependency analysis" in step 1904, and generates a macro flow graph (hereafter abbreviated as "MFG") representing control flow and data dependency among MTs such as BPA, RB, and SB (step 1905). The compiler further performs "data access range analysis" in step 1906 and "earliest executable condition analysis" in step 1907, and represents the result of extracting parallelism among MTs from the MFG as a macro task graph (hereafter abbreviated as "MTG") (step 1908). The compiler then performs various types of restructuring for task fusion (see Non Patent Literature 6), cache memory optimization, local memory management, and the like in "various restructuring" in step 1909. After the restructuring step, the compiler returns to step 1902, and repeatedly performs program reanalysis in steps 1902 to 1909. When reanalysis is no longer necessary, the compiler advances to "task scheduling" in step 1910, to perform scheduling of assigning the MTs on the MTG to processor groups (PGs) in each of which at least one processor core (PE) is grouped. The compiler generates a parallelized program including information of the scheduling, in "parallelized program generation" in step 1911.

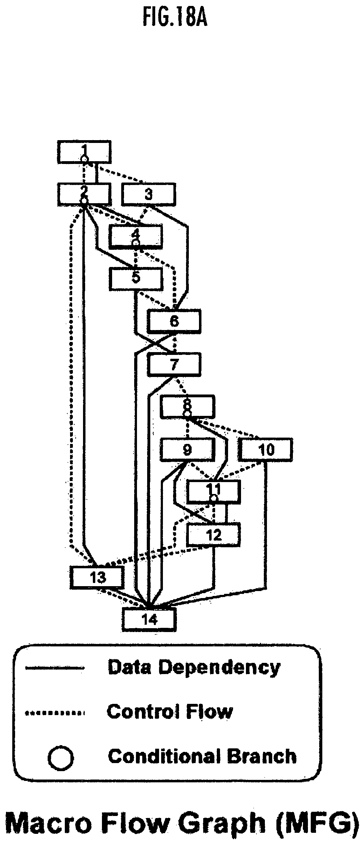

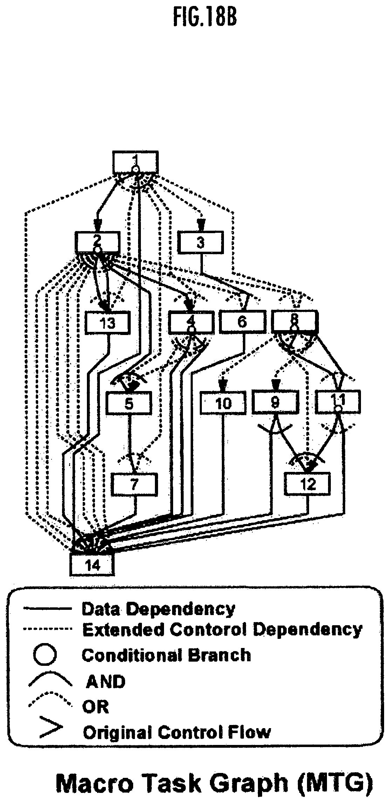

FIG. 18A illustrates an example of the MFG and FIG. 18B illustrates an example of the MTG generated during the above-mentioned process for parallelized program generation by the compiler. In the MFG, nodes indicate MTs, solid edges indicate data dependency, and dotted edges indicate control flow. Small circles in nodes indicate conditional branches. In the MTG, nodes indicate MTs, and small circles in nodes indicate conditional branches in MTs, as in the MFG. Solid edges indicate data dependency, and dotted edges indicate extended control dependency. Extended control dependency includes not only normal control dependency but also a conditional branch ensuring the execution of a predecessor node to satisfy data dependency and control dependency in combination. Arcs connecting edges have two meanings. A solid arc indicates that the edges connected by the arc are in AND relationship, and a dotted arc indicates that the edges connected by the arc are in OR relationship. In the MTG, the arrows of edges are downward, though omitted. Edges having arrows indicate original control flow.

In the coarse grain task parallel processing, the macro tasks generated in each layer are assigned to PGs and executed. Scheduling methods for determining to which PG a macro task is assigned include dynamic scheduling and static scheduling. Whether dynamic scheduling or static scheduling is selected is determined by the parallelization compiler based on the form of the MTG, runtime uncertainty, etc.

In the case where there is runtime uncertainty such as a conditional branch, dynamic scheduling is suitable, and macro tasks are assigned to PGs at runtime by dynamic scheduling. A dynamic scheduling routine operates a macro task execution management table and searches for an earliest executable condition of each macro task, according to the completion or branch direction determination of the macro task. If the macro task is executable, the macro task is enqueued to a ready queue. Macro tasks in the ready queue are sorted according to priority, and the first macro task in the ready queue is assigned to an idle processor core. When generating a dynamic scheduling code, a centralized scheduling method in which one dedicated processor performs scheduling and a distributed scheduling method in which the scheduling function is distributed among processors can be selectively used based on the number of processors used and the synchronization overhead of the system.

In the case where the MTG has only data-dependent edges, on the other hand, static scheduling is suitable. Static scheduling is a method in which the automatic parallelization compiler assigns macro tasks to PGs at compilation. Static scheduling can reduce runtime scheduling overhead, and reduce data transfer and synchronization overhead.

The parallelized program can also be generated in source-to-source form by parallelizable C or Fortran 77, using an API. In this case, for example, to attain executability in various platforms, API portions may be converted to runtime library calls using an OSCAR API standard interpretation system, after which codes for processors are compiled by the compiler in sequence to generate binary code.

Even when the below-mentioned engine control program of sequential processing is input, as an original program, to the conventional OSCAR compiler described using the flowchart in FIG. 17 and a parallelized program obtained as output is executed on the below-mentioned multicore processor RP-X (see Non Patent Literature 5), an improvement in speed consistent with the number of cores cannot be achieved. As a result of analyzing the cause in detail, the inventors have found out that the parallelism extraction method by the conventional OSCAR compiler is not suitable for the property of the original program.

The reason is explained below. Given that the engine control program has many conditional branches and the like, the conventional OSCAR compiler has difficulty in performing, by static scheduling, parallelization for efficient computation of macro tasks after a conditional branch on the multicore processor including the plurality of processor cores, and has no choice but to perform dynamic scheduling of assigning processor cores at runtime of the parallelized program. Hence, in the case where a process is assigned to a different processor core each time a branch occurs during the execution of the parallelized program, control overhead for process synchronization among cores increases, which results in an insufficient improvement in execution speed by parallelization.

The present techniques accordingly propose an effective parallelism extraction method for extracting parallelism underlying in a program in which basic blocks such as conditional branches and assignment statements continue with no loop processing, to generate a parallelized program suitable for execution on a multicore processor.

### Solution to Problem

According to an aspect of the present invention, there is provided a method of extracting parallelism of an original program by a computer as claimed in claim 1.

According to a typical embodiment of the present invention, an original program in which basic blocks such as conditional branches and assignment statements continue with no loop processing can be appropriately parallelized. A program that needs real-time processing, such as a control program, can also be appropriately parallelized.

### Brief Description of Drawings

FIG. 1A illustrates process flow of a parallelization compiler using an embodiment of a parallelism extraction method according to the present invention.
FIG. 1B illustrates detailed flow of process step 2909 of the parallelization compiler using the embodiment of the parallelism extraction method according to the present invention.
FIG. 2 is a block diagram of a computer for executing the parallelization compiler according to the embodiment of the present invention.
FIG. 3 is a diagram for describing the execution profile result of an engine control program which is an original program.
FIG. 4 illustrates an MTG of Task15main.
FIG 5 is a diagram for describing the execution cost (unit: clock) of each macro task in Task15main.
FIG. 6 is a diagram for describing parallelism in a conditional branch in the embodiment of the present invention.
FIG 7 is a diagram for describing conditional branch copying in the embodiment of the present invention.
FIG 8 illustrates an MFG after inline expansion and conditional branch copying in the embodiment of the present invention.
FIG. 9 illustrates an MTG after task fusion in the embodiment of the present invention.
FIG. 10 is a diagram for describing the structure of an embedded multicore processor used for performance evaluation of a parallelized program generated from Task15main used in an example of the present invention as an original program.
FIG. 11 illustrates the execution profile result in the embodiment of the present invention.
FIG 12 is a diagram for describing the speed improvement rate for scenario 1 in the embodiment of the present invention.
FIG. 13 is a diagram for describing the speed improvement rate for scenario 2 in the embodiment of the present invention.
FIG. 14 is a diagram for describing the speed improvement rate for scenario 3 in the embodiment of the present invention.
FIG. 15 illustrates an example of an MTG before conditional branch copying used for the description of the embodiment of the present invention.
FIG. 16 illustrates an example of an MTG after conditional branch copying used for the description of the embodiment of the present invention.
FIG. 17 illustrates process flow of a conventional parallelization compiler.
FIG. 18A is a diagram for describing an example of an MFG.
FIG. 18B is a diagram for describing an example of an MTG.

### Description of Embodiments

The following describes an embodiment of the present invention with reference to drawings.

This embodiment describes a method of extracting parallelism in an engine control program as an original program in which basic blocks such as conditional branches and assignment statements continue with no loop processing and it is difficult for the program to be parallelized by the conventional parallelization method, and describes a parallelization method using the extraction method. Note that the present techniques are applicable to parallelization of not only the engine control program described in this embodiment but also other (control) programs characterized by, for example, continuous basic blocks such as conditional branches and assignment statements.

### [Compilation process]

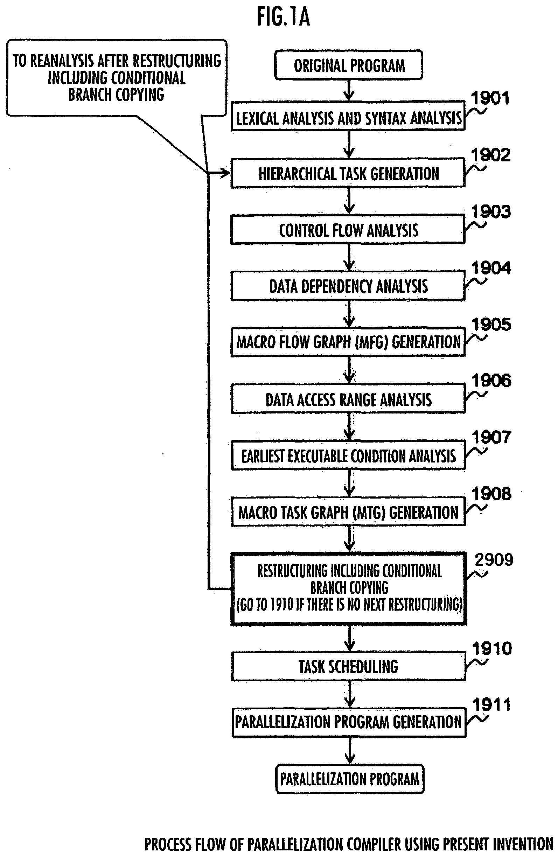

FIG. 1A is a flowchart of a process executed by a parallelization compiler that uses a parallelism extraction method according to the embodiment of the present invention (hereafter abbreviated as "the compiler according to the present techniques").

A process to parallelized program generation, in particular a parallelism extraction process, which is executed on a computer by the compiler according to the embodiment of the present invention for generating a high-performance parallelized program from an original program of sequential processing with many conditional branches, is described below. The parallelization compiler illustrated in FIG. 1A has a feature that conditional branch copying for parallelism extraction described below is added to the restructuring function in step 1909, shown in Fig. 17, as compared with the conventional OSCAR compiler. Hence, in the following description, the processes in steps 1901 to 1908, 1910, and 1911 are implemented in the conventional parallelization compiler. Step 2909 by the parallelization compiler using the parallelism extraction method according to the present techniques (hereafter abbreviated as "the compiler according to the present techniques") is hereafter referred to as "restructuring including conditional branch copying". Step 2909 is a step in which the conditional branch copying function which is a feature of the present techniques is added to "various restructuring" in step 1909 in the conventional parallelization compiler. The following describes the detailed process and its advantageous effect.

First, the parallelization compiler performs lexical analysis on the source program, and syntax analysis on the program (step 1901). Though the compiler analyzes the program in this embodiment, a programmer (human) may analyze the program in the case where the program is a simple program or the like. Moreover, information of the program necessary for the compiler may be produced upon producing the source program.

Next, the parallelization compiler generates a representation by hierarchical macro tasks of the program, based on the syntax analysis result (step 1902). Here, coarse grain tasks (macro tasks) are generated. In the case where the generated macro tasks are processed parallelly or sequentially in loop iteration level, the macro tasks are decomposed into a plurality of different macro tasks based on memory size of local memory or the like (loop aligned decomposition).

After this, the parallelization compiler analyzes control dependency (control flow) among the generated macro tasks (step 1903), analyzes data dependency among the macro tasks (step 1904), and generates an MFG based on the analysis results (step 1905). The parallelization compiler then analyzes the range of data accessed by each macro task based on the MFG (step 1906).

Following this, the parallelization compiler analyzes the earliest executable condition enabling the earliest execution of the program, using the above-mentioned program analysis results (step 1907). The parallelization compiler determines the number of processors assigned to the macro tasks and the parallel processing segments, to generate an MTG (step 1908).

The parallelization compiler then extracts, for a plurality of macro tasks determined to be executed in the same condition, a conditional branch regarding which the plurality of macro tasks are executable in parallel (e.g. have no data dependency), and copies the extracted conditional branch ("restructuring including conditional branch copying" in step 2909). If the copied conditional branches include a conditional branch to be further copied, the parallelization compiler returns to step 1902 to reanalyze the program after copying and, having performed steps 1902 to 1908, performs step 2909. Step 2909 is repeatedly performed until there is no more conditional branch copying or restructuring.

After this, the parallelization compiler performs task scheduling for determining the execution order of the macro tasks (step 1910). The task scheduling performed here includes memory management and task scheduling, data transfer scheduling, and low power consumption scheduling.

The memory management and task scheduling is scheduling for efficient data transmission/reception of each processor core in the multicore processor via local memory. The data transfer scheduling is scheduling for optimizing data transfer in each processor core and data transfer in the whole multicore processor, such as preload and post-store. The low power consumption scheduling is scheduling for achieving, in the case where a general-purpose processor (CPU), an accelerator (ACC), a data transfer unit (DTU), and the like in the multicore processor are in a wait state, power control of changing the clock frequency to low frequency or disconnecting power depending on the wait time.

The parallelization compiler then generates a parallelized program executable on the multicore processor, based on the task scheduling in step 1910 (step 1911). The parallelized program is generated based on the configuration of the multicore processor, and so includes statements of macro tasks for the general-purpose processor (CPU), macro tasks for the ACC, and macro tasks for the DTU. In the parallelized program generated here, a flat set statement and a flat check statement are inserted in the statements of macro tasks for the general-purpose processor (CPU), macro tasks for the ACC, and macro tasks for the DTU that are dependent on each other. These statements of macro tasks for the ACC and macro tasks for the DTU and the flag area are arranged in at least one memory out of distributed shared memory (URAM), local memory (ILM, DLM), on-chip centralized shared memory, and off-chip centralized shared memory.

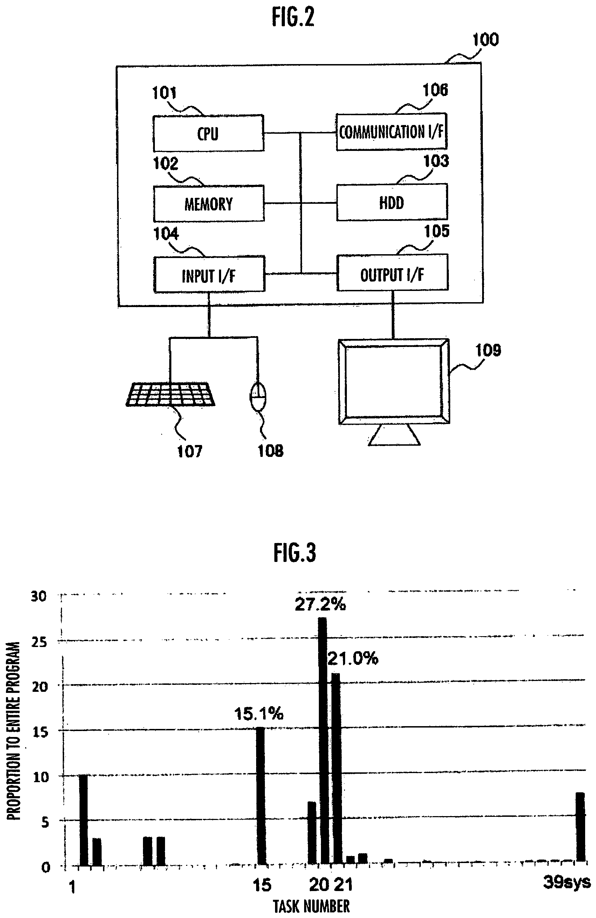

FIG. 2 is a block diagram illustrating the physical structure of a computer 100 for executing the process of the compiler according to the embodiment of the present invention.

The computer 100 is a computer including a processor (CPU) 101, memory 102, a nonvolatile storage device (HDD) 103, and a communication interface 106.

The processor 101 executes a program stored in the memory 102.

The memory 102 is a high-speed volatile storage device such as dynamic random access memory (DRAM), and stores an operating system (OS) and an application program. The basic functions of the computer 100 are realized by the processor 101 executing the operating system, and the functions of the parallelization compiler are realized by the processor 101 executing the application program.

The storage device 103 is a large-capacity nonvolatile storage device such as a magnetic storage device or flash memory, and stores a compiler and an original program executed by the processor 101. In other words, the compiler to be executed by the processor 101 is read from the storage device 103 and loaded into the memory 102, and executed by the processor 101.

The communication interface 106 controls communication between the computer 100 and other computers.

The computer 100 may include an input interface 104 and an output interface 105. The input interface 104 receives input from a keyboard 107 and a mouse 108 which are input devices. The output interface 105 is connected to a display device 109 which is an output device, and outputs a signal for displaying a computation result to the display device 109.

The computer 100 is a system that operates on one or more logically or physically configured computers. The parallelization compiler may run on one computer, or on a virtual computer constructed on a plurality of physical computer resources.

A program to be executed by the processor 101 is provided to each server via a removable medium (CD-ROM, flash memory, etc.) or a network, and stored in the storage device 103 which is a non-temporary storage medium. Each server may accordingly include an interface for reading such a removable medium.

### [Overview of engine control program of sequential processing]

The following describes an overview of the engine control program including the original program in this embodiment.

The engine control program in this embodiment is written in C, and runs on OSEK/VDX which is a real-time OS for vehicles (for example, see Non Patent Literature 3).

The operation of the program is described below.

In the following description, "task" in the engine control program is the term used in vehicle control programs, and corresponds to the above-mentioned original program input to the parallelization compiler.

In the case where the engine control program is executed on a conventional single-core processor, first a StartOS function which is an API provided by the OSEK/VDX is called from a main function in C, to start the OS.

After this, the execution of tasks periodically executed from the entry task is reserved. In this engine control program, 38 tasks, namely, Task2 to Task39, are defined in total, and the execution of Task22 to Task39 which are periodic tasks is reserved. Task2 to Task21 are tasks indirectly called from the periodic tasks.

Next, the periodic tasks are periodically executed according to a timer in the OS.

FIG 3 illustrates the execution profile result. This is the result of measurement using an in-vehicle microcomputer actually executing the engine control program. In FIG. 3, the horizontal axis indicates the task number, and the vertical axis indicates the proportion of the execution time of each task to the total program execution time. As illustrated in FIG 3, Task20 has the longest processing time, followed by Task21 and Task15. Of these, Task20 and Task21 are idle tasks (tasks prepared merely for waiting without computation). Accordingly, this embodiment focuses on Task15 which has substantially the largest processing amount, and extracts parallelism from Task15 as an original program and generates a parallelized program.

[Extraction of parallelism from engine control program and parallelization method]

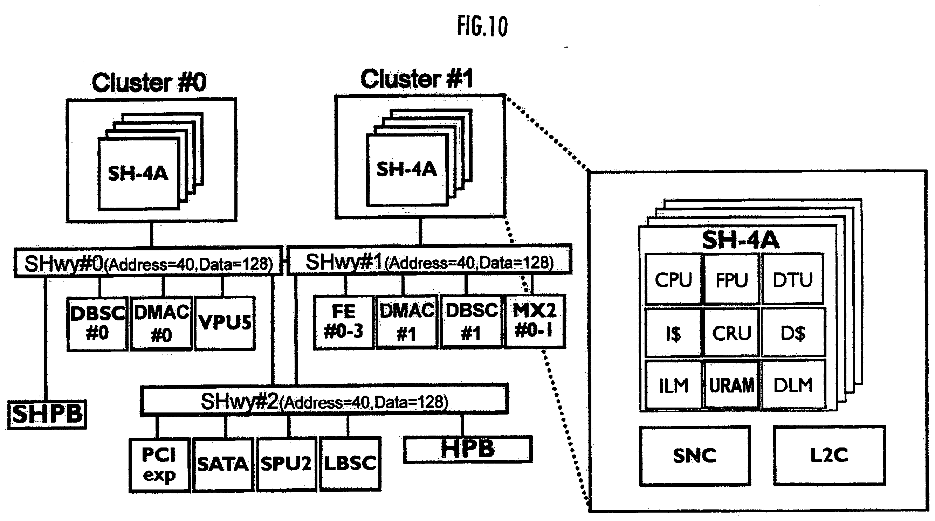

The following describes the method of extracting parallelism from Task15 in the engine control program and the parallelization method. The parallelization process by the compiler according to the present techniques is performed on the premise that the generated parallelized program is executed on a multicore processor RP-X illustrated in FIG. 10 for performance evaluation.

First, the parallelism of Task15 is analyzed. Process steps 1901 to 1908 of the compiler in the parallelism analysis are the same as the process steps of the conventional OSCAR compiler illustrated in FIG. 17. Task15 has an entry function, which is referred to as Task15main. The engine control program includes a Taskl5 computing unit body and a test driver, and the test driver executes Task15 in three execution scenarios of scenario 1, scenario 2, and scenario 3. The following describes the parallelism extraction method with regard to Task15main as the original program.

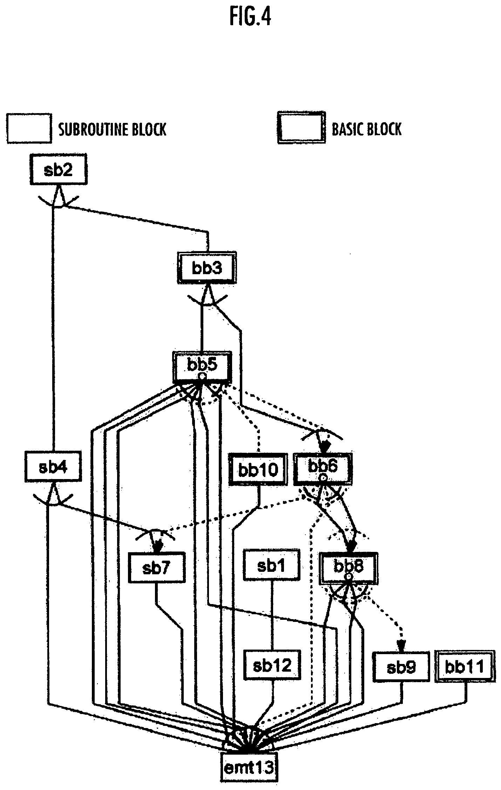

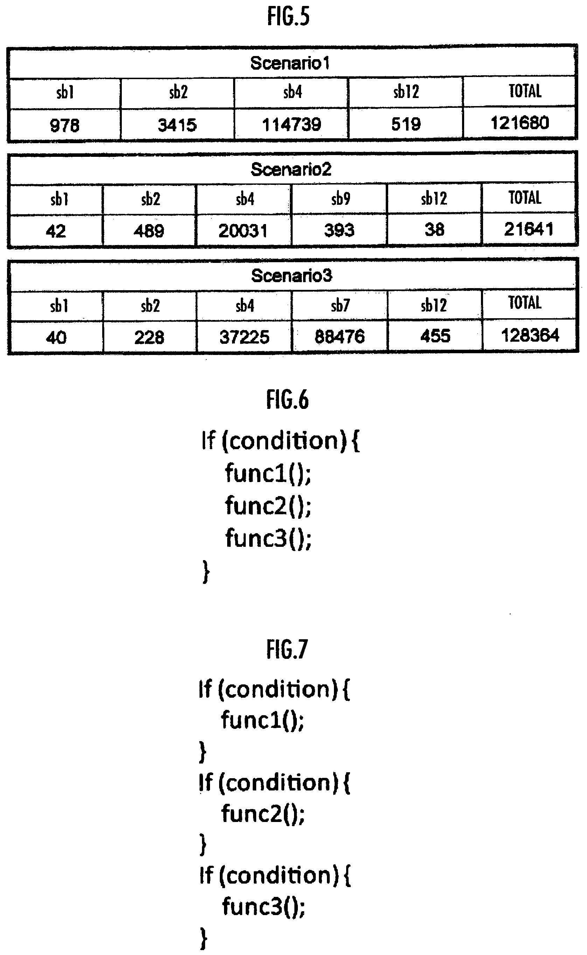

FIG. 4 illustrates the MTG of Task15main generated through "earliest executable condition analysis" in step 1907 in the flowchart of the process performed by the compiler according to the embodiment of the present invention illustrated in FIG. 1A. In the MTG in FIG. 4, each macro task in a rectangle, such as sb2 and sb4, is a subroutine block, and each macro task in a double rectangle, such as bb3 and bb5, is a basic block. FIG. 5 illustrates the execution cost (time) of each macro task depending on execution scenario. The unit of execution cost in FIG. 5 is clock.

The execution cost of each macro task illustrated in FIG. 5 is measured on the RP-X at 648 MHz, and input to the compiler beforehand as data necessary for "earliest executable time analysis" in step 1907 and the like in the parallelization process of Task15main by the compiler. The RP-X is an embedded multicore processor, the structure of which will be described later with reference to FIG. 10.

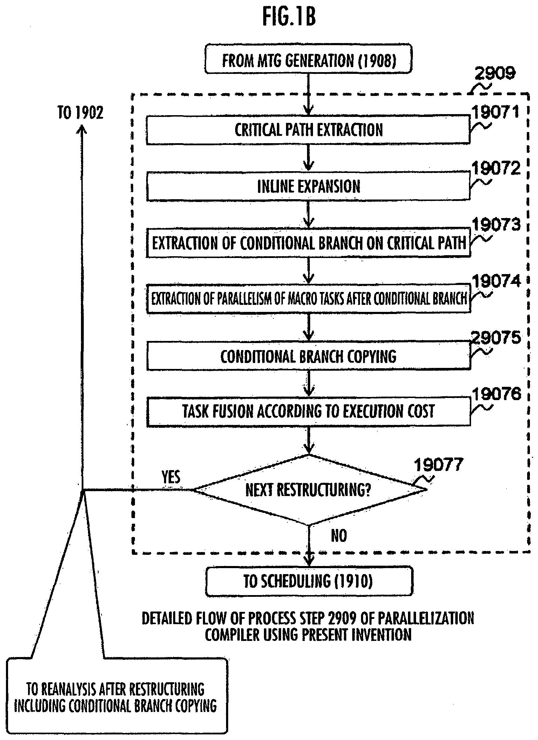

After the generation of the MTG of Task15main, the compiler advances to "restructuring including conditional branch copying" in step 2909 in FIG. 1A, which is a feature of the parallelism extraction method according to the present techniques. This is a step in which the conditional branch copying function according to the present techniques is added to the function "various restructuring" in step 1909 of the conventional parallelization compiler illustrated in FIG. 17, as mentioned earlier. In the following description, this step is also simply referred to as "restructuring". The details are described below, using FIG. 1B which illustrates more detailed process flow of the process in step 2909. In FIG. 1B, steps 19071 to 19074, 19076, and 19077 are included in step 1909 of the conventional parallelization compiler illustrated in FIG. 17, whereas step 29075 is a conditional branch copying step which is a feature of the present techniques.

As illustrated in FIG. 4, sb1, bb3, and sb4 are executable in parallel in this layer, and so the parallelism is 3. As illustrated in FIG. 5, the proportion of the execution time of sb4 is relatively high, that is, 94.3% in scenario 1 and 92.6% in scenario 2. It is therefore important to parallelize the inside of sb4 in these scenarios. In scenario 3, on the other hand, sb4 is 29% and sb7 is 68.9%, and so it is important to parallelize the inside of each of sb4 and sb7. In any case, a path including sb4 and sb7 is a critical path. The process of finding the critical path in this way is the critical path extraction in step 19071 in FIG. 1B.

In the case where conditional branches and assignment statements continue in the structure of the program with no large loop processing, a parallelization compiler that uses the conventional parallelism extraction method has no choice but to perform dynamic scheduling, as mentioned earlier. As can be seen from FIG. 5, however, the execution time is very short, and so there is a problem in that synchronization overhead upon parallelization and scheduling overhead in dynamic scheduling are relatively large.

It is therefore important to apply static scheduling by using coarse grain parallelization using parallelism among functions or using (near-fine-grain) parallelization using parallelism of assignment statements in order to parallelize the program.

The following describes inline expansion in next step 19072 in the restructuring performed on the original program of sequential processing for improved parallelism.

First, for effective use of parallelism included in sb4 and sb7 in FIG. 4, a function that has parallelism and has relatively large execution cost is selected based on the MTG of the internal functions of sb4 and sb7 and the profile information of the RP-X, and the function is inline-expanded to the layer of Task15main. This improves parallelism in the layer of Task15main.

To shorten the parallel processing time in the MTG after the inline expansion, each conditional branch on the path (critical path) indicating the longest processing time on the MTG is extracted (step 19073), and parallelism among a plurality of macro tasks (i.e. no data dependency among the macro tasks) following a conditional branch from among the extracted conditional branches is extracted (step 19074). The conditional branch is copied based on the extracted parallelism (step 29075).

In the example of the original program used in this embodiment, sb7 is present in the conditional branch. Therefore, even when sb7 is inline-expanded, the inline expansion results are contained within one conditional branch and assigned to a processor as one macro task. Accordingly, to extract parallelism in the conditional branch, the compiler copies the conditional branch. Take, for example, a conditional branch illustrated in FIG 6. Suppose three functions in the conditional branch are parallelizable, and the conditional expression (condition) is unchanged in the conditional branch.

In the state illustrated in FIG. 6, the conditional branch is assigned to one processor, with it being impossible to utilize the parallelism of func1 to func3. Hence, the program is rewritten as in FIG. 7. This process copies the conditional branch to three macro tasks in total, allowing the macro tasks to be assigned to separate processors. The series of processes for the above-mentioned conditional branch copying is performed in step 29075. There is a possibility that, as a result of this process, another path becomes a critical path on the MTG In such a case, the compiler returns to step 1902 and, after steps 1902 to 1908, applies conditional branch copying to the new critical path in step 2909. These processes are performed as long as conditional branch copying and task fusion described later are necessary. This enables extraction of parallelism in the conditional branch, and improves parallelism in the layer of Task15main.

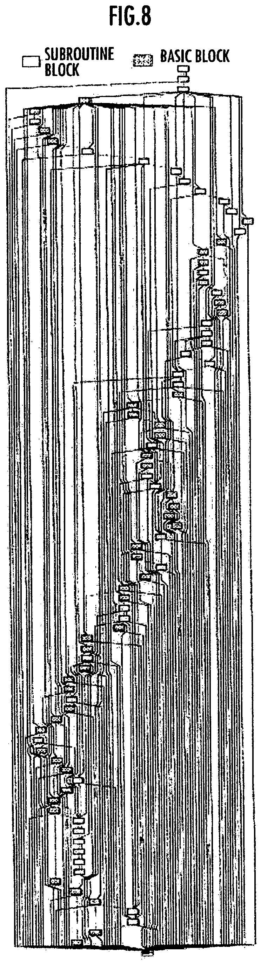

FIG. 8 illustrates the MFG of Task15main generated as a result of step 1905 after performing inline expansion and conditional branch copying to improve parallelism. The MFG in FIG. 8 is generated in step 1905 after conditional branch copying is performed in an inline expansion state in step 2909, so that many small-grain macro tasks exist.

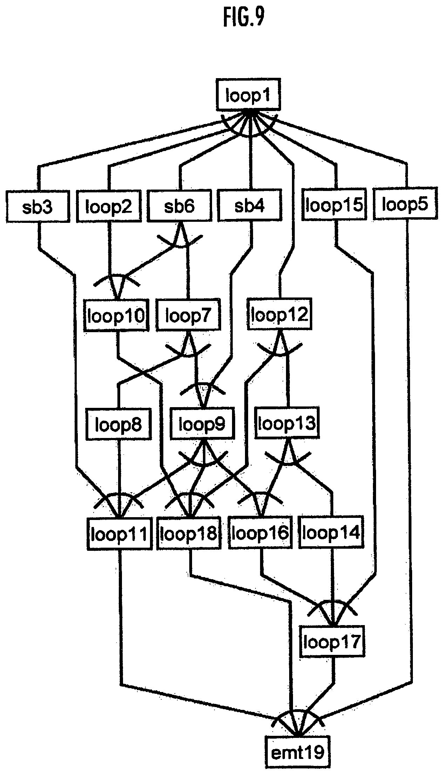

Accordingly, after the MTG is generated from the MFG in FIG. 8 in step 1908, task fusion of fusing a plurality of tasks with small execution cost as one coarse grain task (macro task) is performed in step 19076 in step 2909 in this embodiment. FIG. 9 illustrates the MTG generated as a result of the task fusion. In FIG. 9, blocks subjected to task fusion are indicated as "loop". As illustrated in FIG. 9, by task-fusing conditional branches or assignment statements within the range that does not impair parallelism, each macro task can be given a grain size corresponding to such processing cost that relatively reduces the control overhead of the program. Through such a process, parallelism of about 2 parallels with only data dependency can be extracted. This allows the control flow to be wholly summarized into data dependency form, with it being possible to apply static scheduling having low overhead. Note that the execution cost-based task fusion process function (step 19076) is not a feature of the present techniques as mentioned earlier, and is implemented in the conventional OSCAR compiler, too (see Non Patent Literature 6).

Process flow in the case where parallelism extraction and parallelized program generation by restructuring including conditional branch copying are performed by the compiler according to the present techniques has been described above. Conditional branch copying executed here is briefly described below, using a specific example.

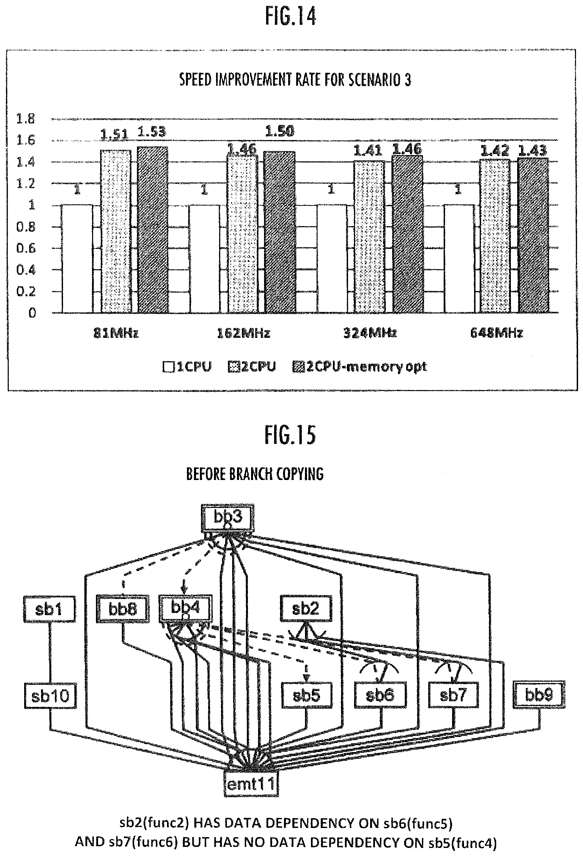

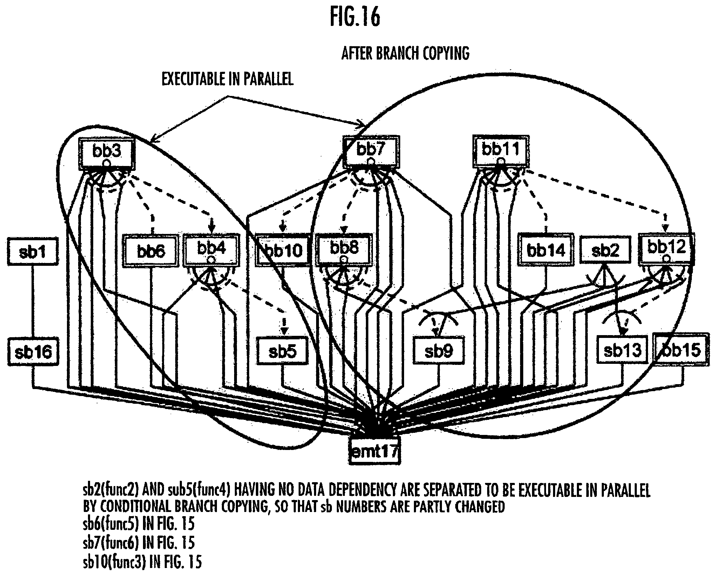

FIG. 15 illustrates an example of an MTG before conditional branch copying, which is prepared to describe conditional branch copying step 29075 in more detail. FIG. 16 is an MTG obtained by applying the conditional branch copying process to the MTG in FIG. 15.

In the MTG before conditional branch copying in FIG. 15, sb2(func2) has data dependency on sb6(func5) and sb7(func6), but has no data dependency on sb5(func4). Accordingly, the conditional branch represented in the MTG in FIG. 15 is copied to generate two conditional branches, to enable the path including sb2 to be included in one conditional branch and sb5 executable in parallel with sb2 to be included in the other conditional branch.

Thus, in the MTG after conditional branch copying in FIG. 16, sb2(func2) and sb5(func4) having no data dependency are separated to be executable in parallel, and so can be assigned to two processor cores. Note that some sub-block numbers are changed as a result of conditional branch copying.
Before branch copying sb6(func5) → Branch sb9
Before branch copying sb7(func6) → After branch copying sb13
Before branch copying sb10(func3) → After branch copying sb 16

### [Performance evaluation]

The program obtained by parallelizing the vehicle engine control program described in the embodiment using the parallelism extraction method according to the present invention is executed on the embedded multicore processor RP-X to evaluate its parallel processing performance.

The structure of the embedded multicore processor RP-X used for performance evaluation on the engine control program parallelized by the above-mentioned method is described first.

As illustrated in FIG. 10, the RP-X is a 45 nm low power technology, 15-core multicore processor, and includes 8 SH-4A cores operating with the operating frequency being changed among 648 MHz, 324 MHz, 162 MHz, and 81 MHz as general-purpose processor cores, 4 FE-GA cores operating with 324 MHz as accelerator cores, and other hardware IP cores.

Memory in each general-purpose processor core includes an instruction cache (32 KB), a data cache (32 KB), local memory (ILM, DLM: 16 KB), distributed shared memory (URAM: 64 KB), and a data transfer unit. The accelerator cores are accelerators without controllers, and are connected to an on-chip bus (SHwy#1).

Given that 2-core multicore processors have been studied in current engine control systems, 2 SH-4A cores as general-purpose processor cores are used as computation resources in this example. Performance is evaluated while fixing the operating frequency of the bus at 324 MHz when changing the operating frequency of the general-purpose cores in order of 648 MHz, 324 MHz, 162 MHz, and 81 MHz. The reason for fixing the operating frequency of the bus and decreasing the operating frequency of the general-purpose cores is to relatively reduce memory access latency, thus bring memory access latency closer to that in the environment of small in-vehicle microcomputers.

The following describes the parallel processing performance evaluation condition on the embedded multicore processor RP-X.

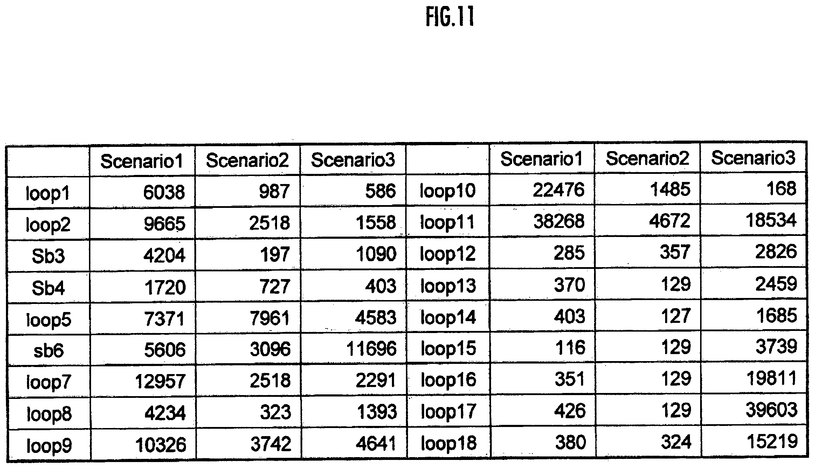

FIG. 11 illustrates the execution profile result of Task15main executed at 648 MHz on the RP-X. Here, the unit is clock. Upon performance evaluation on the RP-X, the profile information is provided to the compiler for each scenario and static scheduling is performed, thus distributing the load. In FIG. 11, the execution cost differs in each scenario. This is because the load distribution is important for faster processing in each scenario.

Global variables are typically arranged in the off-chip shared memory. In this case, data can be read in 1 cycle at a cache hit, but 55 cycles are needed to read data at a cache miss. This penalty is significant in programs that run on the order of microseconds such as the engine control program. It is therefore important to arrange global variables in the local memory with low memory access latency. If all global variables are arranged in the local memory, however, the memory capacity is exceeded. Only global variables (about 7.5 Kbytes) without initial values are accordingly arranged in the local memory, so as not to exceed the memory capacity. Besides, arranging synchronization variables for synchronization among processor cores in the off-chip shared memory has significant memory access latency penalty, so that synchronization variables are arranged in the distributed shared memory with low latency. This enables faster processing.

The performance in the case where all global variables are arranged in the shared memory and the performance in the case where part of the global variables are arranged in the local memory and the synchronization variables for synchronization among the processor cores are arranged in the distributed shared memory are evaluated to compare performance depending on memory arrangement.

The following describes the parallel processing performance evaluation result on the embedded multicore processor RP-X.

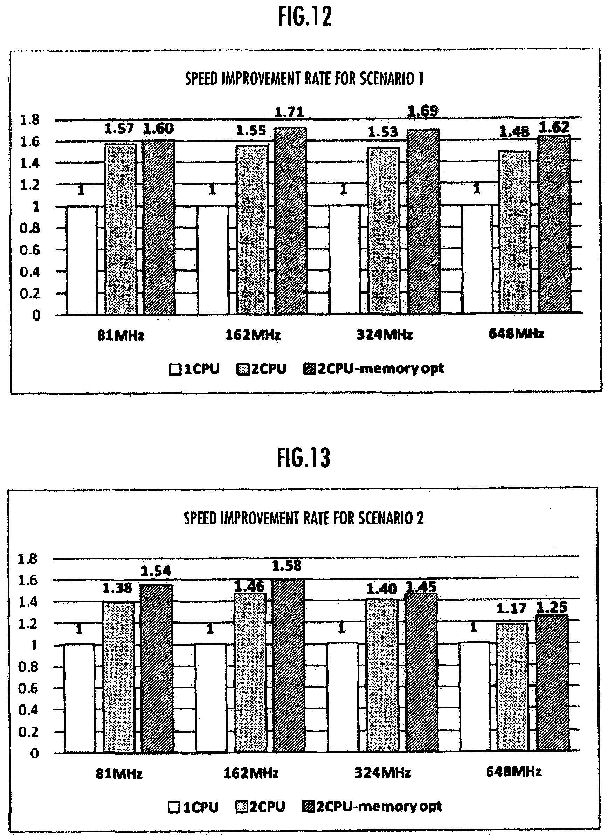

FIG 12 illustrates the speed improvement rate in the case of executing scenario 1 by 1 CPU, by 2 CPUs, and by 2 CPUs with optimized memory arrangement. In FIG. 12, the horizontal axis indicates the operating frequency, and the vertical axis indicates the speed improvement rate with respect to when executed by 1 CPU. Specific execution times are shown in Table 1. The speed is improved 1.57 times at 81 MHz, 1.55 times at 162 MHz, 1.53 times at 324 MHz, and 1.48 times at 648 MHz. In the case where the memory arrangement is optimized, the speed is improved 1.60 times at 81 MHz, 1.71 times at 162 MHz, 1.69 times at 324 MHz, and 1.62 times at 648 MHz. The performance improvement from 2% to 11% is attained by optimizing the memory arrangement.

### [Table 1]

**Table summarizing processing time in the case of executing scenario 1**

| | 81MHz | 162MHz | 324MHz | 648MHz |
|---|---|---|---|---|
| 1CPU | 356.2us | 253.9us | 198.5us | 174.7us |
| 2CPU | 227.0us | 163.8us | 129.8us | 118.3us |
| 2CPU-memory opt | 222.4us | 148.1us | 117.1us | 107.7us |

FIG. 13 illustrates the speed improvement rate in the case of executing scenario 2 by 1 CPU, by 2 CPUs, and by 2 CPUs with optimized memory arrangement. In FIG 13, the horizontal axis indicates the operating frequency, and the vertical axis indicates the speed improvement rate with respect to when executed by 1 CPU. Specific execution times are shown in Table 2. The speed is improved 1.38 times at 81 MHz, 1.46 times at 162 MHz, 1.40 times at 324 MHz, and 1.17 times at 648 MHz. In the case where the memory arrangement is optimized, the speed is improved 1.54 times at 81 MHz, 1.58 times at 162 MHz, 1.45 times at 324 MHz, and 1.25 times at 648 MHz. The performance improvement from 3% to 11% is attained by optimizing the memory arrangement.

### [Table 2]

**Table summarizing processing time in the case of executing scenario 2**

| | 81MHz | 162MHz | 324MHz | 648MHz |
|---|---|---|---|---|
| 1CPU | 122.0us | 74.4us | 49.9us | 37.2us |
| 2CPU | 88.6us | 51.0us | 35.6us | 31.7us |
| 2CPU-memory opt | 79.5us | 47.1us | 34.5us | 29.9us |

FIG. 14 illustrates the speed improvement rate in the case of executing scenario 3 by 1 CPU, by 2 CPUs, and by 2 CPUs with optimized memory arrangement. In FIG. 14, the horizontal axis indicates the operating frequency, and the vertical axis indicates the speed improvement rate with respect to when executed by 1 CPU. Specific execution times are shown in Table 3. The speed is improved 1.51 times at 81 MHz, 1.46 times at 162 MHz, 1.41 times at 324 MHz, and 1.42 times at 648 MHz. In the case where the memory arrangement is optimized, the speed is improved 1.53 times at 81 MHz, 1.50 times at 162 MHz, 1.46 times at 324 MHz, and 1.43 times at 648 MHz. The performance improvement from 1% to 3% is attained by optimizing the memory arrangement.

### [Table 3]

**Table summarizing processing time in the case of executing scenario 3**

| | 81MHz | 162MHz | 324MHz | 648MHz |
|---|---|---|---|---|
| 1CPU | 546.3us | 356.2us | 255.5us | 207.7us |
| 2CPU | 360.8us | 243.2us | 181.1us | 146.7us |
| 2CPU-memory opt | 356.5us | 237.7us | 175.1us | 145.4us |

The foregoing example of the present invention describes the parallelism extraction method which is a feature of the present techniques and the program parallelization method using the parallelism extraction method in the case of parallelizing the vehicle engine control program of sequential processing and executing it on the multicore processor. Moreover, after the inline expansion of functions with relatively high execution cost and the parallelism extraction including conditional branch copying are performed to extract parallelism in the original program of sequential processing and the task fusion for applying static scheduling is performed using the compiler according to the present techniques, that is, after the original program of sequential processing is restructured, the parallelized program is generated and its parallel processing performance is evaluated on the embedded multicore processor. As a result, in the case where 2 processor cores are used in the vehicle engine control program which has been extremely difficult to be parallelized with conventionally no example of success in parallelization on a multicore processor, performance is improved 1.71 times at 162 MHz in scenario 1, as compared with the case where 1 processor core is used.

This example demonstrates that faster processing can be achieved through parallelization by the compiler, with it being possible to automatically parallelize and speed up the vehicle engine control program. Thus, the method according to the present techniques enables an increase in speed by parallel processing, even in a program having many conditional branches and assignment statements such as a vehicle engine control program or a typical control program.

## Claims

1. A method of extracting parallelism of an original program by a computer (100), the method comprising:
a first process of generating macro tasks (BPA, RB, SB) based on the syntax analysis result (1902) to be executed by a multicore processor, from the original program;
a second process of analyzing a control flow (1903) and data dependency of the macro tasks (BPA, RB, SB) (1904) and generating a macro flow graph (MFG) (1905);
a third process of analyzing an earliest executable condition of the macro tasks (BPA, RB, SB), based on a result of the second process (MFG)(1907), to extract parallelism among the macro tasks (BPA, RB, SB) and determining the number of processors assigned to the macro tasks and the parallel processing segments, to generate a macro task graph (MTG) (1908);
**characterized in that** the method further comprises:
a fourth process of extracting a conditional branch (19073), followed by a plurality of macro tasks (func1, func2, func3, sb5, sb6, sb7) which are included in the macro tasks (BPA, RB, SB)(19074), and which are determined to be executed in a same condition and executable in parallel, based on a result of the third process (29075);
a fifth process of copying the conditional branch extracted in the fourth process, to generate a plurality of conditional branches; and
a sixth process of making each of the plurality of macro tasks (func1, func2, func3, sb5, sb6, sb7) follow each of the plurality of conditional branches and fusing the each of the plurality of conditional branches and the each of the plurality of macro tasks into a plurality of new macro tasks, each of the plurality of new macro tasks being assignable via static scheduling to each of a plurality of processor cores included in the multicore processor.

2. The method of extracting parallelism according to claim 1, wherein the process of determining whether the plurality of macro tasks (func1, func2, func3, sb5, sb6, sb7) to be executed in parallel is processed based on data dependency among the plurality of macro tasks (func1, func2, func3, sb5, sb6, sb7).

3. The method of extracting parallelism according to claim 1 or 2, wherein a conditional branch included in a path having a longest execution time in the original program is copied.

4. The method of extracting parallelism according to any one of claims 1 to 3, wherein a conditional branch is copied, which is included in a path that has a longest execution time, among paths connected to a plurality of conditional branches generated by copying the path having the longest execution time in the original program.

5. A method of producing, by a computer (100), a program executable on a multicore processor (101) including a plurality of processor cores from an original program,
wherein the plurality of conditional branches generated using the method of extracting parallelism according to any one of claims 1 to 4 are assigned to be executed by the respective plurality of processor cores, and
wherein the plurality of macro tasks (func1, func2, func3, sb5, sb6, sb7) to be executed after the condition of the conditional branch is satisfied are assigned to be executed by the respective processor cores that have executed the plurality of conditional branches.

## Patentansprüche

1. Verfahren zum Extrahieren von Parallelität eines ursprünglichen Programms durch einen Computer (100), wobei das Verfahren Folgendes umfasst:
einen ersten Prozess zum Erzeugen von Makroaufgaben (BPA, RB, SB) basierend auf dem Syntaxanalyseergebnis (1902), das durch einen Multicore-Prozessor ausgeführt werden soll, aus dem ursprünglichen Programm;
einen zweiten Prozess zum Analysieren eines Kontrollflusses (1903) und von Datenabhängigkeit der Makroaufgaben (BPA, RB, SE) (1904) und Erzeugen eines Makroflussgraphen (MFG) (1905);
einen dritten Prozess zum Analysieren einer frühesten ausführbaren Bedingung der Makroaufgaben (BPA, RB, SB) basierend auf einem Ergebnis des zweiten Prozesses (MFG) (1907), um Parallelität zwischen den Makroaufgaben (BPA, RB, SE) zu extrahieren und Bestimmen der Anzahl an Prozessoren, die den Makroaufgaben und den Parallelverarbeitungssegmenten zugewiesen sind, um einen Makroaufgabengraphen (MTG) zu erzeugen (1908);
**dadurch gekennzeichnet, dass** das Verfahren ferner Folgendes umfasst:
einen vierten Prozess zum Extrahieren eines Bedingungszweigs (19073), gefolgt von einer Vielzahl von Makroaufgaben (func1, func2, func3, sb5, sb6, sb7), die in den Makroaufgaben (BPA, RB, SE) enthalten sind (19074) und die bestimmt sind, in einer gleichen Bedingung ausgeführt zu werden und parallel ausführbar sind, basierend auf einem Ergebnis des dritten Prozesses (29075);
einen fünften Prozess zum Kopieren des Bedingungszweigs, der in dem vierten Prozess extrahiert wird, um eine Vielzahl von Bedingungszweigen zu erzeugen; und
einen sechsten Prozess zum Veranlassen, dass jede aus der Vielzahl von Makroaufgaben (func1, func2, func3, sb5, sb6, sb7) jedem aus der Vielzahl von Bedingungszweigen folgt und Fusionieren von jedem aus der Vielzahl von Bedingungszweigen und jeder aus der Vielzahl von Makroaufgaben zu einer Vielzahl von neuen Makroaufgaben, wobei jede aus der Vielzahl von neuen Makroaufgaben über statische Planung jedem aus einer Vielzahl von Prozessorkernen zuweisbar ist, die in dem Multicore-Prozessor enthalten sind.

2. Verfahren zum Extrahieren von Parallelität nach Anspruch 1, wobei der Prozess zum Bestimmen, ob die Vielzahl von Makroaufgaben (func1, func2, func3, sb5, sb6, sb7), die parallel ausgeführt werden soll, basierend auf Datenabhängigkeit zwischen der Vielzahl von Makroaufgaben (func1, func2, func3, sb5, sb6, sb7) verarbeitet wird.

3. Verfahren zum Extrahieren von Parallelität nach Anspruch 1 oder 2, wobei ein Bedingungszweig, der in einem Pfad enthalten ist, der eine längste Ausführungszeit in dem ursprünglichen Programm aufweist, kopiert wird.

4. Verfahren zum Extrahieren von Parallelität nach einem der Ansprüche 1 bis 3, wobei ein Bedingungszweig kopiert wird, der in einem Pfad enthalten ist, der eine längste Ausführungszeit aufweist, zwischen Pfaden, die mit einer Vielzahl von Bedingungszweigen verbunden sind, die durch Kopieren des Pfades erzeugt werden, der die längste Ausführungszeit in dem ursprünglichen Programm aufweist.

5. Verfahren zum Erzeugen, durch einen Computer (100), eines Programms, das auf einem Multicore-Prozessor (101) ausführbar ist, der eine Vielzahl von Prozessorkernen von einem ursprünglichen Programm beinhaltet,
wobei die Vielzahl von Bedingungszweigen, die unter Anwendung des Verfahrens zum Extrahieren von Parallelität nach einem der Ansprüche 1 bis 4 erzeugt wird, zugewiesen wird, um durch die jeweilige Vielzahl von Prozessorkernen ausgeführt zu werden, und
wobei die Vielzahl von Makroaufgaben (func1, func2, func3, sb5, sb6, sb7), die ausgeführt werden soll, nachdem die Bedingung des Bedingungszweigs erfüllt ist, zugewiesen wird, um durch die jeweiligen Prozessorkerne ausgeführt zu werden, welche die Vielzahl von Bedingungszweigen ausgeführt haben.

## Revendications

1. Procédé d'extraction de parallélisme d'un programme d'origine par un ordinateur (100), le procédé comprenant :
un premier processus de génération de macro-tâches (BPA, RB, SB) sur la base du résultat d'analyse syntaxique (1902) à exécuter par un processeur multicœur, à partir du programme d'origine ;
un deuxième processus d'analyse d'un flux de commande (1903) et d'une dépendance de données des macro-tâches (BPA, RB, SE) (1904) et la génération d'un graphe de macro-flux (MFG) (1905) ;
un troisième processus d'analyse d'une toute première condition exécutable des macro-tâches (BPA, RB, SB), sur la base d'un résultat du deuxième processus (MFG) (1907), pour extraire le parallélisme entre les macro-tâches (BPA, RB, SE) et de détermination du nombre de processeurs affectés aux macro-tâches et aux segments de traitement parallèles, pour générer un graphe de macros-tâches (MTG) (1908);
**caractérisé en ce que** le procédé comprend en outre :
un quatrième processus d'extraction d'une branche conditionnelle (19073), suivi d'une pluralité de macro-tâches (func1, func2, func3, sb5, sb6, sb7) qui sont comprises dans les macro-tâches (BPA, RB, SE) (19074),
et qui sont déterminées pour être exécutées dans une même condition et exécutables en parallèle, sur la base d'un résultat du troisième processus (29075)
un cinquième processus de copie de la branche conditionnelle extraite dans le quatrième processus, pour générer une pluralité de branches conditionnelles ; et
un sixième processus pour amener chacune de la pluralité de macro-tâches (func1, func2, func3, sb5, sb6, sb7) à suivre chacune de la pluralité de branches conditionnelles et fusionner chacune de la pluralité de branches conditionnelles et chacune de la pluralité de macro-tâches en une pluralité de nouvelles macro-tâches, chacune de la pluralité de nouvelles macro-tâches pouvant être affectée par l'intermédiaire d'un ordonnancement statique à chacun d'une pluralité de cœurs de processeur compris dans le processeur multicœur.

2. Procédé d'extraction de parallélisme selon la revendication 1, ledit processus de détermination pour savoir si la pluralité de macro-tâches (func1, func2, func3, sb5, sb6, sb7) à exécuter en parallèle sont traitées sur la base de la dépendance de données parmi la pluralité de macros-tâches (func1, func2, func3, sb5, sb6, sb7).

3. Procédé d'extraction de parallélisme selon la revendication 1 ou 2, une branche conditionnelle comprise dans un chemin possédant le temps d'exécution le plus long dans le programme d'origine étant copiée.

4. Procédé d'extraction de parallélisme selon l'une quelconque des revendications 1 à 3, une branche conditionnelle étant copiée, qui est comprise dans un chemin qui possède le temps d'exécution le plus long, parmi les chemins raccordés à une pluralité de branches conditionnelles générées en copiant le chemin possédant le temps d'exécution le plus long dans le programme d'origine.

5. Procédé de production, par un ordinateur (100), d'un programme exécutable sur un processeur multicœur (101) comprenant une pluralité de cœurs de processeur à partir d'un programme d'origine,
ladite pluralité de branches conditionnelles générées à l'aide du procédé d'extraction de parallélisme selon l'une quelconque des revendications 1 à 4 étant affectées pour être exécutées par la pluralité respective de cœurs de processeur, et
ladite pluralité de macro-tâches (func1, func2, func3, sb5, sb6, sb7) à exécuter après que la condition de la branche conditionnelle est satisfaite étant affectées pour être exécutées par les cœurs de processeur respectifs qui ont exécutés la pluralité de branches conditionnelles.
